Europäisches Patentamt

European Patent Office

Office européen des brevets

(19)

(11) Veröffentlichungsnummer: **0 264 766**
**B1**

(12) **EUROPÄISCHE PATENTSCHRIFT**

(45) Veröffentlichungstag der Patentschrift:
06.06.90

(21) Anmeldenummer: 87114885.4

(22) Anmeldetag: 13.10.87

(51) Int. Cl.⁵: **B62D 25/18**

(54) **Vorrichtung an Kraftfahrzeugen zum Verhindern bzw. Reduzieren des Auswurfs von Wasserschwaden aus den Radkästen beim Befahren nasser Fahrbahnen.**

(30) Priorität: 22.10.86 DE 3635854

(43) Veröffentlichungstag der Anmeldung:
27.04.88 Patentblatt 88/17

(45) Bekanntmachung des Hinweises auf die Patenterteilung:
06.06.90 Patentblatt 90/23

(84) Benannte Vertragsstaaten:
AT BE CH DE ES FR GB GR IT LI LU NL SE

(56) Entgegenhaltungen:
FR-A- 850 128

PATENT ABSTRACTS OF JAPAN, Band 8,
Nr. 16 (M-270)[1453], 24. Januar 1984; &
JP-A-58 177 779 (NISSAN JIDOSHA K.K.) 18-10-1983

(73) Patentinhaber: BUCHNER, Fritz, E 7, 25,
D-6800 Mannheim(DE)

(72) Erfinder: BUCHNER, Fritz, E 7, 25, D-6800 Mannheim(DE)

(74) Vertreter: Geitz, Heinrich, Dr.-Ing.,
Postfach 2708 Kaiserstrasse 156,
D-7500 Karlsruhe 1(DE)

## Beschreibung

Die Erfindung bezieht sich auf eine Vorrichtung an Kraftfahrzeugen zum Verhindern bzw. Reduzieren des Auswurfs von Wasserschwaden aus den Radkästen beim Befahren nasser Fahrbahnen, mit einem sich im wesentlichen über die gesamte Breite des jeweiligen Radkastens erstreckenden und an diesem in Fahrtrichtung hinten liegend angeordneten Abweisteil, das unter Bildung eines Spaltes bis annähernd an die Lauffläche des in dem jeweiligen Radkasten umlaufenden Fahrzeugrades heranreicht.

Eine Vorrichtung dieser Art ist aus der FR-A3 2 431 412 bekannt. Dabei handelt es sich um ein fest im Radkasten eingebautes Abweisteil, das an die baulichen Gegebenheiten des jeweiligen Fahrzeugtyps angepaßt, mithin also für jeden Fahrzeugtyp anders ausgeführt sein muß. Die Spaltweite zwischen der Lauffläche des Fahrzeugrades und der zur Lauffläche hinweisenden Kante des Abweisteils muß so bemessen sein, daß einerseits ein unproblematischer Radwechsel und andererseits auch Fahrbetrieb mit Schneeketten möglich ist. Es muß mithin eine entsprechend große Spaltweite vorgesehen sein, die naturgemäß die Wirksamkeit des Abweisers beeinträchtigt und das Eintragen von Wasserpartikeln, die auch mit Schmutzpartikeln durchsetzt sein können, in die Radkästen zuläßt.

Die der Erfindung zugrundeliegende Aufgabe besteht daher darin, eine verbesserte Vorrichtung an Kraftfahrzeugen zum Verhindern bzw. Reduzieren des Auswurfs von Wasserschwaden aus den Radkästen beim Befahren nasser Fahrbahnen zu schaffen, die in einfacher Weise an die Gegebenheiten des jeweiligen Einsatzfalles bei beliebigen Fahrzeugen anpaßbar ist und auch eine Anpassung an die Erfordernisse im Winterfahrbetrieb mit Schneeketten ermöglicht.

Gelöst ist diese Aufgabe dadurch, daß bei der im Oberbegriff des Patentanspruchs 1 angegebenen Vorrichtung im Bereich des hinten liegenden unteren Endes des Radkastens eine zweiflügelige Abweisklappe schwenkbar angelenkt ist, deren einer Flügel sich von der Anlenkachse an Radkasten abwärts zur Fahrbahn hin erstreckt, während der andere Flügel das zur Lauffläche des Fahrzeugrades hin gerichtete Abweisteil bildet.

Mit einer so gestalteten Vorrichtung können Fahrzeuge ohne Sonderausbildung der Radkasten nachträglich ausgerüstet werden und es gelingt in einfacher Weise eine Einstellung des sich zur Lauffläche des Fahrzeugrades hin erstreckwenden, das Abweisteil bildenden Flügels unter Ausbildung eines engen Spaltes, der die von einem umlaufenden Fahrzeugrad abgeschleuderten Wasser- und Schmutzpartikeln mit großer Wirksamkeit am Eintreten in den Radkasten hindert. Der sich zur Fahrbahn hin erstreckende Flügel der Vorrichtung bildet dabei für im Verkehr nachfolgende Fahrzeuge einen wirksamen Schutz.

Die schwenkbare Anlenkung eines Schmutzfängers an ein so in einen Radkasten einbaubares Halteteil, daß die Anlenkachse für den Schmutzfänger sich im Bereich der hinten liegenden unteren Kante eines mit der Vorrichtung ausgerüsteten Radkastens erstreckt, ist zwar bereits aus der US-A 4 453 728 bekannt, aber bei der Vorrichtung nach dieser Vorveröffentlichung ist kein annähernd radial zur Lauffläche des jeweiligen Fahrzeugrades hin gerichtetes Abweisteil vorhanden, mittels dessen das Eintragen von Wasser- und Schmutzpartikeln in die Radkästen verhindert werden könnte. Bei dieser Vorrichtung ist vielmehr ein in den jeweiligen Radkasten einbaubares Halteteil vorgesehen, das einen der Lauffläche angepaßten Ausschnitt aufweist und sich außenseitig teilweise um das in dem betreffenden Radkasten umlaufende Fahrzeugrad herum erstreckt. Eine Anpassung an unterschiedliche Einsatzbedingungen ist bei dieser Vorrichtung nicht möglich.

Bei der Erfindung gelingt hingegen eine besonders einfache Anpassung an beispielsweise die Erfordernisse im Winterfahrbetrieb mit Schneeketten, wenn gemäß einer Ausgestaltung der Vorrichtung der zur Lauffläche des jeweiligen Fahrzeugrades hin gerichtete Flügel der Abweisklappe hinsichtlich des Spaltes gegenüber der Lauffläche einstellbar ist.

Nach dieser Ausgestaltung können mithin im Fahrbetrieb auf feuchten Straßen, wenn es in besonderem Maße darauf ankommt, den Auswurf von Wasserschwaden aus den Radkästen zu unterbinden, engste Spalte zwischen dem als Abweisteil dienende Flügel und der Lauffläche des jeweiligen Fahrzeugrades realisiert werden. Im Winterfahrbetrieb hingegen ist eine Einstellung auf entsprechend größere Spaltweiten möglich, die ein ungehindertes Durchlaufen von Schneeketten zulassen.

Eine weitere vorteilhafte Ausgestaltung der Erfindung sieht vor, daß die Abweisklappe um ihre Anlenkachse am Radkasten innerhalb vorbestimmter Grenzen frei schwenkbar gelagert ist und infolge Schwerkraftwirkung in ihrer Betriebsstellung mit dem zur Lauffläche des Fahrzeugrades hinweisenden Flügel unter Ausbildung eines Spaltes gegenüber der Lauffläche gehalten ist.

Diese Maßnahme hat sich im praktischen Fahrbetrieb als zweckmäßig und vorteilhaft erwiesen. Auch bei dieser Ausgestaltung können die beiden Flügel der Abweisklappe relativ zueinander einstellbar sein, so daß in Abhängigkeit von der jeweiligen Einstellung der Flügel den Gegebenheiten der Einsatzfälle entsprechend geringe Spaltweiten zwischen der Lauffläche und dem zu dieser hin gerichteten Flügel der Abweisklappe gewährleistet sind.

Eine Ausführungsform der Erfindung soll nachstehend anhand der beigefügten Zeichnung erläutert werden. In schematischen Ansichten zeigen:

Fig. 1 in einer seitlichen Ansicht der Frontpartie eines Lastkraftwagens ein Fahrzeugrad und einen dieses oberseitig über einem Umfangsbereich von etwa 180° abdeckenden Radkasten mit einer in Fahrtrichtung hinten im Bereich des unteren Radkastenendes angeordneten zweiflügeligen Abweisklappe,

Fig. 2 gemäß Pfeil II. in Fig. 1 eine rückseitige Teilansicht des Radkastens mit der im Bereich der in Fahrtrichtung hinten liegenden Radkastenunterkante angelenkten Abweisklappe,

Fig. 3 die Abweisklappe für sich allein in einer vergrößerten perspektivischen Teilansicht und

Fig. 4 in einer vergrößerten rückseitigen Teilansicht ähnlich Fig. 3 eine abgewandelte Ausführungsform der erfindungsgemäßen Vorrichtung.

Bei dem in einer Teilansicht veranschaulichten Fahrzeug 10 läuft das Fahrzeugrad 11 in einem letzteres oberseitig unter Ausbildung eines Ringkanals 12 etwa äquidistant zur Lauffläche 13 über einem Umfangsbereich von ungefähr 180° und jedenfalls im Laufflächenbereich auch innenseitig abgedeckten Radkasten 14 um.

An der in Fahrtrichtung hinten liegenden Unterkante 15 des Radkastens 14 ist als Vorrichtung zum Verhindern oder zumindest Reduzieren des Auswurfs von Wasserschwaden aus den Radkasten eine zweiflügelige Abweisklappe 16 angeordnet. Die Abweisklappe besitzt einen Flügel 17, der in Fahrtrichtung leicht nach unten weisend sich etwa radial zum Fahrzeugrad 11 erstreckt und unter Ausbildung eines Spaltes 18 bis nahe an die Lauffläche 13 des Fahrzeugrades heranreicht, während der andere Flügel 19 sich im wesentlichen nach unten zur Fahrbahn 20 hin erstreckt und im Abstand von dieser endet.

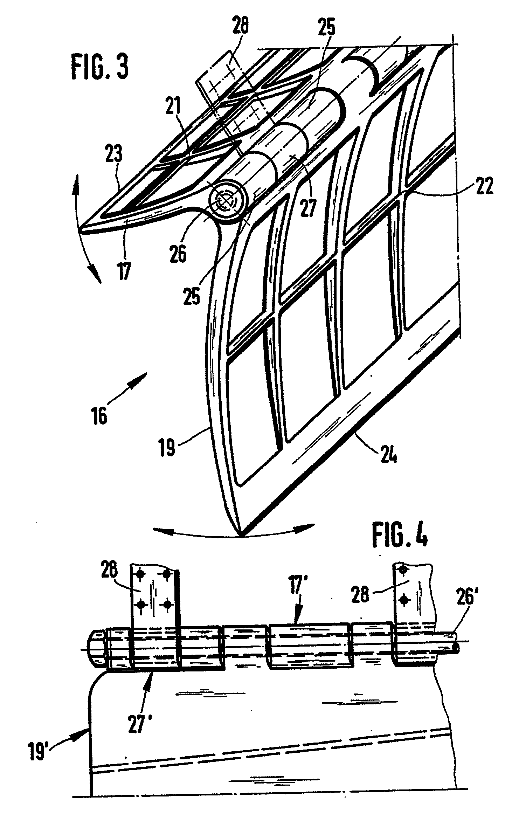

Bei der zweiflügeligen Abweisklappe 16, die in Fig. 3 in einer vergrößerten perspektivischen Teilansicht gezeigt ist, handelt es sich um ein Winkelprofil aus Gummi mit einvulkanisierten Verstärkungseinlagen und den beiden sich von einer gemeinsamen Längskante forterstreckenden Flügeln 17, 19. Diese Flügel sind profilaußenseitig mit Versteilfungsrippen 21, 22 versehen und enden in parallel zu der gemeinsamen Längskante verlaufenden Kanten 23, 24. Die beiden Flügel 17, 19 der Abweisklappe 16 schließen einen Winkel von annähernd 90° ein. Auf der von den Flügeln abgewandten Seite der Längskante ist in Nabenteilen 25 eine Anlenkachse 26 aufgenommen, die ihrerseits jeweils zwischen zwei benachbarten Nabenteilen 25 ein Scharnierteil 27 mit einer sich davon forterstreckenden Befestigungslasche 28 aufnimmt.

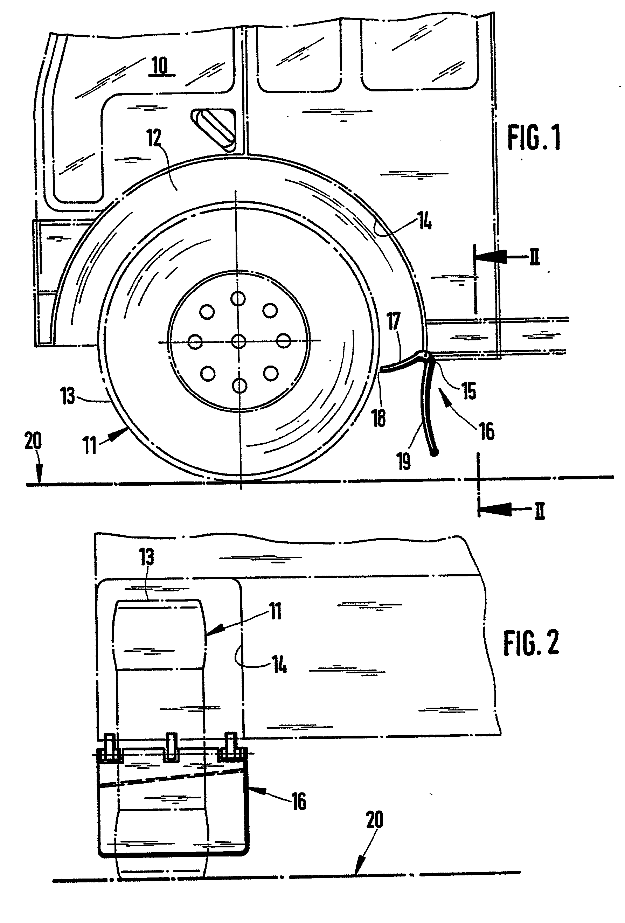

Mittels dieser Befestigungslaschen 28 ist die Abweisklappe 16 in der in Fig. 2 schematisch angedeuteten Weise im Bereich der in Fahrtrichtung hinten liegenden Unterkante 15 des Radkastens 14 mit horizontal und etwa in Parallellage zur Rotationsachse des Fahrzeugrades 11 verlaufender Anlenkachse 26 schwenkbar angelenkt und mit ihren sich zur Lauffläche 13 des Fahrzeugrades 11 hin erstreckenden Flügel 17 so gehalten, daß zwischen der Lauffläche des Fahrzeugrades und der von der Anlenkachse entfernten Vorderkante 23 des Flügels 17 ein Spalt geringer radialer Spaltweite auftritt.

Im Fahrbetrieb auf regennassen Straßen nehmen die Profilierungen der Fahrzeugräder 11 Wasser- und auch Schmutzpartikel auf, die nach dem Lösen der Lauffläche 13 von der Fahrbahn 20 aus den Profilierungen herausgeschleudert werden. Ein Teil der abgeschleuderten Wasser- und Schmutzpartikel wird dabei unterhalb der Radkästen nach hinten geworfen, während ein anderer Teil vom umlaufenden Fahrzeugrad mitgenommen und bei Fahrzeugen ohne erfindungsgemäße Abweisklappe von unten in die Radkästen 14 eingetragen wird.

Für in die Radkästen eingetragenen Wasserpartikel wirken die Laufflächenprofilierungen der umlaufenden Fahrzeugräder 11 wie Ventilatorräder, so daß eine Förderung der mit Schmutzpartikeln vermischten Wasserpartikel innerhalb der sich zwischen den äußeren Begrenzungen der Radkästen 14 und den Laufflächen der Fahrzeugräder erstreckenden Ringkanal 12 stattfindet und etwa beginnend mit dem oberen Kulminationspunkt der Umlaufbahn des jeweiligen Fahrzeugrades sich ein Druckaufbau einstellt mit der Folge, daß die mit mehr oder weniger Schmutzpartikeln durchsetzten Wasserpartikel in stark vernebelter Form seitwärts aus den Radkästen ausgeworfen werden.

Dieser Effekt wird durch die erfindungsgemäße Vorrichtung verhindert, indem der Flügel 17 der Abweisklappe 16 die Unterseite des Radkastens 14, durch die Wasserpartikel in den sich zwischen Radkasten und Lauffläche des jeweiligen Fahrzeugrades erstreckenden Ringkanal 12 eingetragen werden könnten, mit Ausnahme eines Spaltes 18 abschließt, der nur eine geringe Spaltweite zwischen der Lauffläche 13 des Fahrzeugrades 11 und der zu diesem hinweisenden Kante 23 des Flügels aufweist. Vom Fahrzeugrad mitgenommene Partikel werden somit gewissermaßen abgeschält und an der Unterseite des Flügels 17 in Richtung auf den weiteren, sich im wesentlichen vertikal erstreckenden Flügel 19 der Abweisklappe abgelenkt, der darüber hinaus auch von Fahrzeugrad nach hinten abgeschleuderte Partikel auffängt und zur Fahrbahn hin ablenkt.

Die Ausführungsform nach Fig. 4 unterscheidet sich von der oben insbesondere im Zusammenhang mit Fig. 3 erläuterten Ausführungsform dadurch, daß anstelle der einstückigen Ausbildung der Abweisklappe die Flügel 17', 19' mittels ihrer Nabenteile an einer gemeinsamen Schwenkachse 26' angelenkt, aber unabhängig voneinander einstellbar sind. Ferner sind auf der Anlenkachse in axialem Abstand voneinander wieder mehrere Scharnierteile 27' mit sich von diesen forterstreckenden Befestigungslaschen 28' zum Anbringen einer derartigen Vorrichtung im Bereich der in Fahrtrichtung hinten liegenden Unterkante eines Radkastens aufgenommen.

**Patentansprüche**

1. Vorrichtung an Kraftfahrzeugen zum Verhindern bzw. Reduzieren des Auswurfs von Wasserschwaden aus den Radkästen (14) beim Befahren nasser Fahrbahnen (20), mit einem sich im wesentlichen über die gesamte Breite des jeweiligen Radkastens (14) erstreckenden und an diesem in Fahrtrichtung hinten liegend angeordneten Abweisteil (17), das unter Bildung eines Spaltes (18) bis annähernd an die Lauffläche (13) des in dem jeweiligen Radkasten (14) umlaufenden Fahrzeugrades (11) heranreicht, dadurch gekennzeichnet, daß im Bereich des hinten liegenden unteren Endes des Radkastens (14) eine zweiflügelige Abweisklappe (16) schwenkbar angelenkt ist, deren einer Flügel (19) sich von der Anlenkachse (26, 26') am Radkasten abwärts zum Fahrbahn (20) hin erstreckt, während der andere Flügel (17) das zur Lauffläche des Fahrzeugrades (11) hin gerichtete Abweisteil bildet.

2. Vorrichtung nach Anspruch 1, dadurch gekennzeichnet, daß der andere Flügel (17) der Abweisklappe (16) hinsichtlich des Spaltes (18) gegenüber der Lauffläche (13) des in dem Radkasten (14) umlaufenden Fahrzeugrades (11) einstellbar ist.

3. Vorrichtung nach Anspruch 1 oder 2, dadurch gekennzeichnet, daß die Abweisklappe (16) um ihre Anlenkachse (26) am Radkasten (14) innerhalb vorbestimmter Grenzen frei schwenkbar gelagert und infolge Schwerkraftwirkung in ihrer Betriebsstellung mit dem zur Lauffläche (13) des Fahrzeugrades (11) hinweisenden Flügel (17) unter Ausbildung eines Spaltes (81) gegenüber der Lauffläche gehalten ist.

**Claims**

1. A device on motor vehicles for preventing or reducing the clouds of water which are thrown out of the wheel housings (14) when travelling on wet carriageways (20), having a deflector member (17) which extends substantially over the entire width of the respective wheel housing (14) and which is arranged at the rear thereof in the direction of travel and which extends almost as far as the tread surface (13) of the vehicle wheel (11) which rotates in the respective wheel housing (14), forming a gap (18), characterised in that a two-limb deflector flap (16) is pivotally mounted in the region of the rearward lower end of the wheel housing (14), one limb (19) of the deflector flap (16) extending from the pivot mounting axis (26, 26') on the wheel housing downwardly towards the carriageway (20) while the other limb (17) forms the deflector member which is directed towards the tread surface of the vehicle wheel (11).

2. A device according to claim 1 characterised in that the other limb (17) of the deflector flap (16) is adjustable in respect of the gap (18) relative to the tread surface (13) of the vehicle wheel (11) which rotates in the wheel housing (14).

3. A device according to claim 1 or claim 2 characterised in that the deflector flap (16) is mounted for free pivotal movement within predetermined limits about its pivot mounting axis (26) on the wheel housing (14) and as a result of the effect of the force of gravity is held in its operative position with the limb (17) pointing towards the tread surface (13) of the vehicle wheel (11), forming a gap (18) relative to the tread surface.

**Revendications**

1. Dispositif pour véhicules automobiles destiné à éviter ou au moins à réduire la projection d'eau hors des cages des roues (14) lors de la circulation sur des routes mouillées (20) comportant une pièce d'évacuation (17) s'étendant essentiellement sur toute la largeur des cages de roues 14 respectives et à leur partie arrière dans la direction de la marche, atteignant presque la bande de roulement (13) de la roue de véhicule (11) en rotation dans la cage de roue (14) et formant vis-à-vis d'elle une fente, caractérisé en ce qu'un volet déflecteur (16) à deux ailes est articulé de manière basculante dans la région de l'extrêmité inférieure arrière de la cage de roue (14), l'une de ses ailes (19) s'étendant de l'axe d'articulation (26, 26') le long de la cage de roue, vers le bas, en direction de la route (20) tandis que l'autre aile (17) forme la pièce d'évacuation dirigée vers la bande de roulement de la roue de véhicule (11).

2. Dispositif selon la revendication 1, caractérisé en ce que l'autre aile (17) du volet déflecteur (16) estrèglable en ce qui concerne la fente 18 qu'elle forme vis-à-vis de la bande de roulement de la roue de véhicule (11) en rotation dans la cage de roue (14).

3. Dispositif selon l'une des revendications 1 ou 2, caractérisé en ce que le volet déflecteur (16) est-monté sur son axe d'articulation (26) à la cage de roue (14) de manière à basculer librement dans des limites prédéterminées et se trouve maintenu dans sa position de fonctionnement sous l'effet de la pesanteur, l'aile (17) tournée vers la bande de roulement (13) de la roue de véhicule (11) formant une fente (18) vis-à-vis de ladite bande de roulement.

FIG.1

FIG. 2

FIG. 3

28   25   21   23   17   26   25   27   22   16   19   24

FIG. 4

28   17'   28   26'   27'   19'